# EUROPÄISCHE PATENTSCHRIFT

(11) **EP 3 091 330 B1**
(45) Veröffentlichungstag und Bekanntmachung des Hinweises auf die Patenterteilung: **31.05.2017**
(21) Anmeldenummer: 16157769.7
(22) Anmeldetag: 29.02.2016
(51) Int. Cl.: G01B 3/12, G01D 11/30

(54) **MESSVORRICHTUNG ZUM MESSEN EINES WEGES UND/ODER EINER GESCHWINDIGKEIT**
MEASURING DEVICE FOR MEASURING A PATH AND/OR A SPEED
DISPOSITIF DE MESURE D'UNE VOIE ET/OU D'UNE VITESSE

(30) Priorität: 08.05.2015 DE 102015107244
(43) Veröffentlichungstag der Anmeldung: 09.11.2016
(73) Patentinhaber: SICK STEGMANN GmbH, 78166 Donaueschingen (DE)
(72) Erfinder: Gao, Xuezhong Rick, Singapur 757438 (SG); Chan, Michelle, Singapur 757438 (SG); Amparo, Marianne, Singapur 757438 (SG)
(74) Vertreter: Ludewigt, Christoph

(56) Entgegenhaltungen:
- DE-A1- 2 105 654
- FR-A1- 2 238 913
- US-A- 3 740 855

## Beschreibung

Die Erfindung betrifft eine Messvorrichtung zum Messen eines Weges und/oder einer Geschwindigkeit eines sich relativ zu der Messvorrichtung bewegenden Objektes.

Eine solche Messvorrichtung wird in der Automatisierungsindustrie dazu verwendet, den Weg und/oder die Geschwindigkeit eines Objektes, beispielsweise eines Transportbandes, zu bestimmen, wobei sich das Transportband relativ zu der Messvorrichtung bewegt. Hierzu wird die Messvorrichtung an einem Bauteil befestigt, das sich ortsfest zu dem Transportband befindet.

Die Messvorrichtung besteht im Wesentlichen aus einem Messrad, das eine vorzugsweise gummierte, gerändelte oder in ähnlicher Weise aufbereitete Lauffläche aufweist und an einer Welle eines Drehgebers befestigt ist. Die vorzugsweise gummierte, gerändelte oder in ähnlicher Weise aufbereitete Lauffläche des Messrads ist auf dem Transportband, insbesondere auf der Oberfläche des Transportbands, reibschlüssig aufgesetzt.

Um eine genaue Messung des Weges und/oder der Geschwindigkeit zu erhalten, ist ein schlupffreier Kontakt zwischen dem Transportband und dem Messrad erforderlich.

Hierbei ist zum Befestigen der Messvorrichtung an dem ortsfesten Bauteil eine Halteeinheit vorgesehen, die auf einer ersten Seite drehfest mit der Messvorrichtung befestigt und auf der der ersten Seite gegenüberliegenden zweiten Seite durch eine Drehlagerung derart drehbar mit dem Bauteil befestigt ist, so dass die Halteeinheit mittels eines Federelements das Messrad gegen die Oberfläche des Transportbands mit einer vorgegebenen Kraft drückt.

Durch die Bewegung des Transportbands wird das Messrad der Messvorrichtung mitbewegt, so dass die Drehung des Messrads über die Welle an dem Drehgeber drehwinkelgenau weitergegeben wird, der den Weg und/oder die Geschwindigkeit des Messrads und somit des Transportbands ermitteln kann. Ferner wird durch die vorgegebene Kraft des Federelements der Halteeinheit eine schlupffreie Messung gewährleistet. Das Dokument DE2105654 zeigt eine bekannte Messvorrichtung zum Messen eines Weges mit einem Messrad, wobei das Messrad mittels eines Federelements gegen das zu messende Objekt gedrückt wird.

Es ist eine Aufgabe der Erfindung, eine Messvorrichtung zum Messen eines Weges und/oder einer Geschwindigkeit eines sich relativ zu der Messvorrichtung bewegenden Objektes derart zu verbessern, dass eine Anpassung der Andruckkraft der Messvorrichtung auf die Oberfläche des Objektes einfach und genau durchführbar ist.

Die Aufgabe wird erfindungsgemäß gelöst durch eine Messvorrichtung zum Messen eines Weges und/oder einer Geschwindigkeit eines sich relativ zu der Messvorrichtung bewegenden Objektes, mit einem Messrad, das an einer Welle eines Drehgebers befestigt ist und mit einer Lauffläche auf dem Objekt aufgesetzt ist, und einer Halteeinheit zum Befestigen der Messvorrichtung an einem ortsfesten Bauteil, die auf einer ersten Seite drehfest mit der Messvorrichtung verbunden und auf der der ersten Seite gegenüberliegenden zweiten Seite durch eine Drehlagerung derart drehbar mit dem Bauteil verbunden ist, so dass die Halteeinheit mittels eines Federelements das Messrad gegen das Objekt drückt, wobei das Federelement auf der ersten Seite mit der Halteeinheit verbunden ist und auf der zweiten Seite in der Drehlagerung derart fixierbar ist, dass ein Fixierungsabschnitt des Federelements gegenüber einem Ende des Federelements entlang einer Längsachse des Federelements verstellbar ist.

Dies hat den Vorteil, dass lediglich eine Änderung an dem Fixierpunkt des Federelements der Halteeinheit durchgeführt werden muss, um eine andere Andruckkraft der Messvorrichtung auf das Transportband entsprechend einer Anwendungsänderung, wie z. B. glattere Oberfläche oder schnellere Geschwindigkeit des Transportbands, einzustellen, ohne die Befestigung der Messvorrichtung an dem ortsfesten Bauteil lösen zu müssen.

Gemäß einem bevorzugten Ausführungsbeispiel weist das Federelement eine Halterung an einem Ende auf, die in der Drehlagerung angeordnet ist und eine Mehrzahl von Kerben aufweist. Vorteilhafterweise ist in die Kerbe ein Verriegelungsmittel versenkbar, so dass das zweite Ende des Federelements durch die Halterung in der Drehlagerung fixiert ist. Weiterhin ist vorteilhafterweise das Verriegelungsmittel eine Schraube oder ein Stift, die bzw. der in die Kerbe eingreift.

Gemäß einem weiteren bevorzugten Ausführungsbeispiel weist die Drehlagerung eine erste Durchbohrung auf, in die ein Ende des Federelements einsteckbar ist.

Gemäß einem weiteren bevorzugten Ausführungsbeispiel ist eine Federsteifigkeit des Federelements durch Verschiebung des Fixierungsabschnitts des Federelements gegenüber dem zweiten Ende des Federelements einstellbar. Vorteilhafterweise reduziert eine Verschiebung des Fixierungsabschnitts in Richtung des zweiten Endes des Federelements die Federsteifigkeit des Federelements. Ferner erhöht vorteilhafterweise eine Verschiebung des Fixierungsabschnitts in entgegengesetzte Richtung zu dem zweiten Ende des Federelements die Federsteifigkeit des Federelements.

Gemäß einem weiteren bevorzugten Ausführungsbeispiel ist das Federelement eine Blattfeder.

Gemäß einem weiteren bevorzugten Ausführungsbeispiel repräsentiert jede Kerbe der Halterung des Federelements eine vordefinierte Federsteifigkeit bzw. eine vordefinierte Andruckkraft des Federelements. Hierdurch ergibt sich der Vorteil, dass eine Änderung der Federsteifigkeit und somit der Andruckkraft des Federelements, beispielsweise 5N (Newton), 10N, oder 15N, ohne zusätzliche Messgeräte genau durchführbar ist.

Gemäß einem weiteren bevorzugten Ausführungsbeispiel weist die Drehlagerung eine zweite Durchbohrung auf, die senkrecht zu der ersten Durchbohrung angeordnet und über die das Verriegelungsmittel in die Kerbe einführbar ist.

Gemäß einem weiteren bevorzugten Ausführungsbeispiel umfasst die verschiebbare, in der Drehlagerung angeordnete Halterung eine Gewindehülse.

Weiterhin ist gemäß einem weiteren bevorzugten Ausführungsbeispiel die Gewindehülse auf das zweite Ende des Federelements aufsteckbar, wobei die Gewindehülse in ein an dem ortfesten Bauteil vorgesehenes Innengewinde greift, und wobei ein Drehen der Gewindehülse in Richtung des ersten Endes des Federelements die Federsteifigkeit des Federelements erhöht und in Richtung des zweiten Endes des Federelements die Federsteifigkeit des Federelements reduziert.

Die erfindungsgemäße Messvorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen Messvorrichtung;
- Fig. 2: eine schematische Seitenansicht der erfindungsgemäßen Messvorrichtung mit hoher Andruckkraft;
- Fig. 2A: eine vergrößerte Detailansicht der Drehlagerung der in der Figur 2 gezeigten erfindungsgemäßen Messvorrichtung;
- Fig. 3: eine schematische Seitenansicht der erfindungsgemäßen Messvorrichtung mit geringer Andruckkraft; und
- Fig. 3A: eine vergrößerte Detailansicht der Drehlagerung der in der Figur 3 gezeigten erfindungsgemäßen Messvorrichtung.

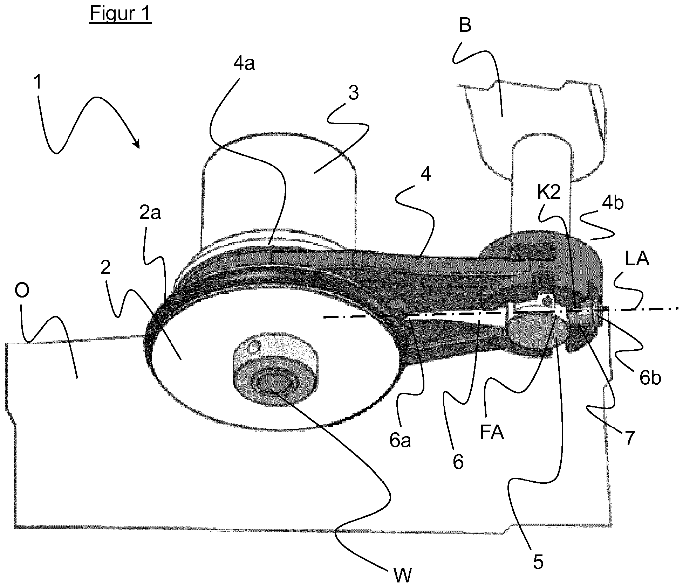

In der Figur 1 ist eine schematische Darstellung einer erfindungsgemäßen Messvorrichtung 1 zum Messen eines Weges und/oder einer Geschwindigkeit eines sich relativ zu der Messvorrichtung 1 bewegenden Objektes O, insbesondere in dem dargestellten Ausführungsbeispiel ein Transportband, gezeigt.

Die erfindungsgemäße Messvorrichtung 1 umfasst ein Messrad 2, einen Drehgeber 3 und eine Halteeinheit 4, wobei das Messrad 2 an einer Welle W des Drehgebers 3 befestigt ist. Die Halteeinheit 4 ist aus einer ersten Seite 4a drehfest mit der Messvorrichtung 1, insbesondere mit dem Drehgeber 3, verbunden und auf der der ersten Seite 4a gegenüberliegenden zweiten Seite 4b durch eine Drehlagerung 5 mit einem gegenüber dem Objekt O ortsfesten Bauteil B verbunden. Die Drehlagerung 5 ist vorzugsweise eine Zylinderbuchse, die senkrecht zu dem ortsfesten Bauteil B befestigt und senkrecht zu einer Bewegungsrichtung des Objektes O angeordnet ist.

Die Drehlagerung 5 ermöglicht der Halteeinheit 4 sich auf einer Ebene, die senkrecht zu einer Oberfläche des Objektes O ist, gegenüber dem ortfesten Bauteil B zu drehen, so dass das Messrad 2 mit einer vorzugsweise gummierten, gerändelten oder in ähnlicher Weise aufbereiteten Lauffläche 2a auf die Oberfläche des Objektes O aufsetzt, um mit der Bewegung des Objektes O reibschlüssig mitzudrehen und Unebenheiten der Oberfläche des Objektes O auszugleichen.

Die Halteeinheit 4 weist ein Federelement 6 auf, das zwischen der ersten Seite 4a und der zweiten Seite 4b der Halteeinheit 4 aufgespannt ist. Hierbei ist ein erstes Ende 6a des Federelements 6 auf der ersten Seite 4a der Halteeinheit 4 fest verbunden und ein zweites Ende 6b des Federelements 6 auf der zweiten Seite 4b der Halteeinheit 4 in der Drehlagerung 5 fixiert.

Das zweite Ende 6b des Federelements 6 ist in der Drehlagerung 5 derart fixiert, dass ein Fixierungsabschnitt FA des Federelements 6 gegenüber dem zweiten Ende 6b des Federelements 6 entlang einer Längsachse LA des Federelements 6 verstellbar ist. D.h. das zweite Ende 6b des Federelements 6 ist nicht punktuell in der Drehlagerung 5 fixiert, sondern ein ganzer Abschnitt des Federelements 6 ist fixiert. Hierzu weist das Federelement 6 vorzugsweise eine auf dem Federelement 6 verschiebbare Halterung 7, insbesondere in Form einer Hülse, an dem zweiten Ende 6b des Federelements 6 auf, die in der Drehlagerung 5 angeordnet ist und eine Mehrzahl von Kerben K1, K2 aufweist.

Durch die Aufhängung des Federelements 6 der Halteeinheit 4 drückt das Federelement 6 das Messrad 2 mit einer definierten Federsteifigkeit bzw. mit einer vorgegebenen definierten Andruckkraft auf die Oberfläche des Objektes O, so dass die Bewegung des Objektes O ohne Schlupf von der erfindungsgemäßen Messvorrichtung 1 erfasst werden kann.

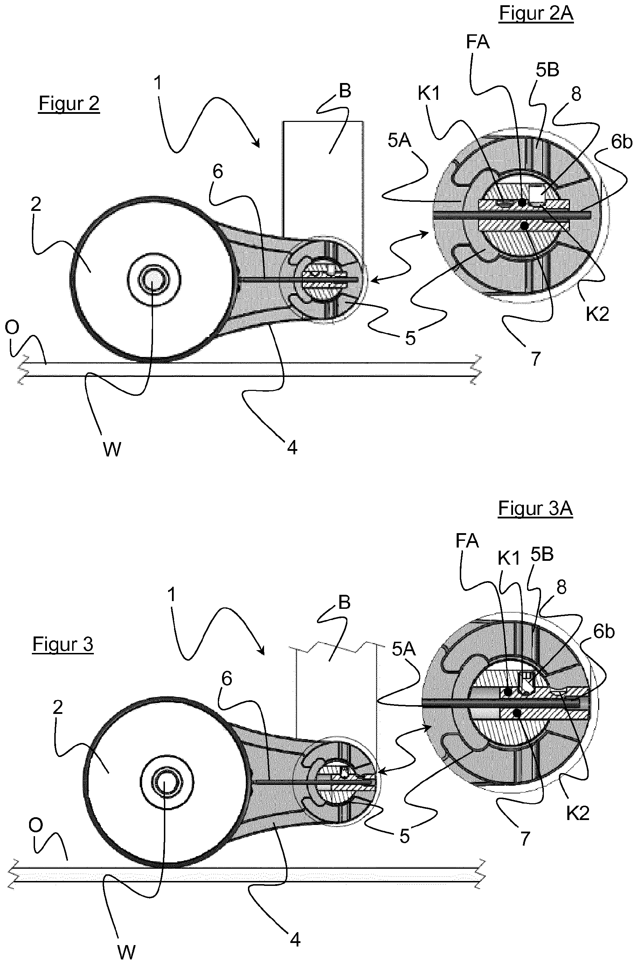

Figur 2 zeigt eine schematische Seitenansicht der erfindungsgemäßen Messvorrichtung 1 mit einer hohen Andruckkraft durch das Federelement 6. Hierbei weist die Drehlagerung 5 vorteilhafterweise eine erste Durchbohrung 5A auf, in die das zweite Ende 6b des Federelements 6 mit der Halterung 7 eingesteckt ist.

Gemäß diesem Ausführungsbeispiel der erfindungsgemäßen Messvorrichtung 1 weist die Halterung 7 zwei Kerben K1, K2 auf, wobei in die dem zweiten Ende 6b des Federelements 6 näher angeordnete Kerbe K2 ein Verriegelungsmittel 8 versenkt ist, so dass das zweite Ende 6b des Federelements 6 durch die Halterung 7 in der Drehlagerung 5 fixiert ist. Vorteilhafterweise ist das Verriegelungsmittel 8 eine Schraube oder ein Stift, die bzw. der in die Kerbe K2 eingreift.

Durch das Versenken des Verriegelungsmittels 8 in die dem zweiten Ende 6b des Federelements 6 näher liegende Kerbe K2 ist die Halterung 7 weiter von dem zweiten Ende 6b des Federelements 6 in der Drehlagerung 5 angeordnet. Hierdurch ist der Fixierungsabschnitt FA des Federelements 6 in entgegengesetzte Richtung zu dem zweiten Ende 6b des Federelements 6 verschoben, so dass der näher zu der ersten Seite 4a der Halteeinheit 4 bzw. näher zu dem Messrad 2 liegende Abschnitt des Federelements 6 versteift wird.

D. h. die Federsteifigkeit des Federelements 6 ist durch die Verschiebung des Fixierungsabschnitts FA des Federelements 6 erhöht.

Aus der vergrößerten Detailansicht in der Figur 2A der Drehlagerung 5 ist die Verschiebung des Fixierungsabschnitts FA des Federelements 6 deutlicher dargestellt.

Der Abschnitt der Halterung 7 mit der Kerbe K1 bewirkt eine erhöhte Versteifung des Federelements 6 in Richtung des Messrades 2, wodurch das Messrad 2 mit einer höheren Andruckkraft auf die Oberfläche des Objektes O gedrückt werden kann.

In dem dargestellten Ausführungsbeispiel ist das Federelement 6 eine Blattfeder, auf der die Halterung 7 angeordnet ist und entlang der Längsachse LA der Blattfeder die Halterung 7 verschiebbar ist.

Im Falle einer Anwendung der erfindungsgemäßen Messvorrichtung 1 mit einer geringeren benötigten Andruckkraft wird erfindungsgemäß der Fixierungsabschnitt FA des Federelements 6 entlang der Längsachse LA des Federelements 6 verstellt. Hierzu, wie in der Figur 3 und 3A dargestellt, sind lediglich ein Lösen des Verriegelungsmittels 8 aus der Kerbe K2 und eine Verschiebung der Halterung 7 in Richtung des zweiten Endes 6b des Federelements 6 sowie ein erneutes Versenken des Verriegelungsmittels 8 in die weiter zu dem zweiten Ende 6b des Federelements 6 liegende Kerbe K1 der Halterung 7 nötig.

Die dargestellte Verschiebung des Fixierungsabschnitts FA des Federelements 6 in Richtung des zweiten Endes 6b des Federelements 6 bewirkt eine Reduzierung der Federsteifigkeit des Abschnitts des Federelements 6 zwischen dem Messrad 2 und der fixierten Kerbe K1. Hierdurch ist die Andruckkraft der Halteeinheit 4 reduziert.

D. h. vorteilhafterweise repräsentiert jede Kerbe K1, K2 der Halterung 7 des Federelements 6 eine vordefinierte Federsteifigkeit bzw. eine vordefinierte Andruckkraft des Federelements 6, so dass eine Änderung der Andruckkraft erfindungsgemäß auch ohne eine zusätzliches Kraftmessgerät genau durchgeführt werden kann.

Weiterhin weist die Drehlagerung 5 eine zweite Durchbohrung 5B auf, die senkrecht zu der ersten Durchbohrung 5A angeordnet ist, so dass über die zweite Durchbohrung 5B der Drehlagerung 5 ein Lösen und ein Versenken des Verriegelungsmittels 8 in die Kerbe K1, K2 auf einfachste Weise durchführbar ist. Hierdurch lässt sich ein Verstellen des Fixierungsabschnitts FA des Federelements 6 einfach und genau durchführen.

Vorteilhafterweise kann die Halterung 7 des Federelements 6 mehr als die zwei gezeigten Kerben K1, K2 aufweisen, so dass ein größerer Einstellbereich bzw. eine feinere Einstellung der Federsteifigkeit des Federelements 6 ermöglicht ist.

Bei einem nicht gezeigten bevorzugten Ausführungsbeispiel der erfindungsgemäßen Messvorrichtung 1 umfasst die verschiebbare und an dem zweiten Ende 6b des Federelements 6 angeordnete Halterung 7 eine Gewindehülse, die ein Außengewinde und eine Innenbohrung aufweist. In die Innenbohrung der Gewindehülse ist das zweite Ende 6b des Federelements 6 eingesteckt. Das Außengewinde der Gewindehülse greift in ein Innengewinde an dem ortfesten Bauteil B, so dass durch Drehen an der Gewindehülse die Gewindehülse entlang des Innengewindes an dem ortfesten Bauteil B innerhalb der zweiten Durchbohrung 5B der Drehlagerung 5 bewegbar ist.

Wenn die Gewindehülse in Richtung des ersten Endes 6a des Federelements 6 bewegt bzw. gedreht wird, wird ein Anteil des Federelements 6, der sich in der Gewindehülse befindet, vergrößert, so dass der Fixierungsabschnitt FA des Federelements 6 ebenfalls in Richtung des ersten Endes 6a des Federelements 6 verschoben wird. Hierdurch wird die Federsteifigkeit bzw. die Andruckkraft des Federelements 6 erhöht.

Wird die Gewindehülse in Richtung des zweiten Endes 6b des Federelements 6 bewegt bzw. gedreht, so bewegt sich die Gewindehülse entlang des Innengewindes des ortsfesten Bauteils B aus der Drehlagerung 5 heraus. Der Anteil des Federelements 6, der sich in der Gewindehülse befindet, verkleinert sich, so dass der Fixierungsabschnitt FA des Federelements 6 ebenfalls in Richtung des zweiten Endes 6b des Federelements 6 verschoben wird. Hierdurch wird die Federsteifigkeit bzw. die Andruckkraft des Federelements 6 reduziert.

Bei diesem bevorzugten Ausführungsbeispiel der erfindungsgemäßen Messvorrichtung 1 ist die zweite Durchbohrung 5B der Drehlagerung 5 nicht notwendig, so dass die Herstellung der Halteeinheit 4 vereinfacht werden kann.

Da die Halterung 7 lediglich aus einer Gewindehülse besteht und durch das Gewinde eine definierte präzise Einstellung des Fixierungsabschnitts FA möglich ist, können auf die Kerben K1 und K2 an der Halterung 7 verzichtet werden, wodurch weitere Kostenvorteile entstehen.

### Bezugszeichenliste

- 1: Messvorrichtung
- 2: Messrad
- 2a: Lauffläche
- 3: Drehgeber
- 4: Halteeinheit
- 4a: Erste Seite der Halteeinheit
- 4b: Zweite Seite der Halteeinheit
- 5: Drehlagerung
- 5A: Erste Durchbohrung
- 5B: Zweite Durchbohrung
- 6: Federelement
- 6a: Erstes Ende des Federelements
- 6b: Zweites Ende des Federelements
- 7: Halterung
- 8: Verriegelungsmittel
- B: Ortfestes Bauteil
- FA: Fixierungsabschnitt
- K1, K2: Kerbe
- LA: Längsachse
- O: Objekt
- W: Welle

## Patentansprüche

1. Messvorrichtung (1) zum Messen eines Weges und/oder einer Geschwindigkeit eines sich relativ zu der Messvorrichtung (1) bewegenden Objektes (O), mit einem Messrad (2), das an einer Welle (W) eines Drehgebers (3) befestigt ist und mit einer Lauffläche (2a) auf dem Objekt (O) aufgesetzt ist, und
einer Halteeinheit (4) zum Befestigen der Messvorrichtung (1) an einem ortsfesten Bauteil (B), die auf einer ersten Seite (4a) drehfest mit der Messvorrichtung (1) verbunden und auf der der ersten Seite (4a) gegenüberliegenden zweiten Seite (4b) durch eine Drehlagerung (5) derart drehbar mit dem Bauteil (B) verbunden ist, so dass die Halteeinheit (4) mittels eines Federelements (6) das Messrad (2) gegen das Objekt (O) drückt, wobei ein erstes Ende (6a) des Federelements (6) auf der ersten Seite (4a) mit der Halteeinheit (4) verbunden ist und ein zweites Ende (6b) des Federelements (6) auf der zweiten Seite (4b) in der Drehlagerung (5) derart fixiert ist, dass ein Fixierungsabschnitt (FA) des Federelements (6) gegenüber dem zweiten Ende (6b) des Federelements (6) entlang einer Längsachse (LA) des Federelements (6) verstellbar ist.

2. Messvorrichtung nach Anspruch 1, wobei die Drehlagerung (5) eine erste Durchbohrung (5A) aufweist, in die das zweite Ende (6b) des Federelements (6) einsteckbar ist.

3. Messvorrichtung nach Anspruch 1 oder 2, wobei das Federelement (6) eine auf dem Federelement (6) verschiebbare Halterung (7) an dem zweiten Ende (6b) aufweist, die in der Drehlagerung (5) angeordnet ist.

4. Messvorrichtung nach Anspruch 3, wobei die verschiebbare Halterung (7) eine Mehrzahl von Kerben (K1, K2) aufweist, wobei in die Kerbe (K1, K2) ein Verriegelungsmittel (8) versenkbar ist, so dass das zweite Ende (6b) des Federelements (6) durch die Halterung (7) in der Drehlagerung (5) fixiert ist.

5. Messvorrichtung nach Anspruch 4, wobei das Verriegelungsmittel (8) eine Schraube oder ein Stift ist, die bzw. der in die Kerbe (K1, K2) eingreift.

6. Messvorrichtung nach einem der vorhergehenden Ansprüche, wobei eine Federsteifigkeit des Federelements (6) durch Verschiebung des Fixierungsabschnitts (FA) des Federelements (6) gegenüber dem zweiten Ende (6b) des Federelements (6) einstellbar ist.

7. Messvorrichtung nach Anspruch 6, wobei eine Verschiebung des Fixierungsabschnitts (FA) in Richtung des zweiten Endes (6b) des Federelements (6) die Federsteifigkeit des Federelements (6) reduziert.

8. Messvorrichtung nach Anspruch 6 oder 7, wobei eine Verschiebung des Fixierungsabschnitts (FA) in entgegengesetzte Richtung zu dem zweiten Ende (6b) des Federelements (6) die Federsteifigkeit des Federelements (6) erhöht.

9. Messvorrichtung nach einem der Ansprüche 4 bis 8, wobei jede Kerbe (K1, K2) der Halterung (7) des Federelements (6) eine vordefinierte Federsteifigkeit bzw. eine vordefinierte Andruckkraft des Federelements (6) repräsentiert.

10. Messvorrichtung nach einem der vorhergehenden Ansprüche, wobei die Drehlagerung (5) eine zweite Durchbohrung (5B) aufweist, die senkrecht zu der ersten Durchbohrung (5A) angeordnet und über die das Verriegelungsmittel (8) in die Kerbe (K1, K2) einführbar ist.

11. Messvorrichtung nach Anspruch 3, wobei die verschiebbare, in der Drehlagerung (5) angeordnete Halterung eine Gewindehülse umfasst.

12. Messvorrichtung nach Anspruch 11, wobei die Gewindehülse auf das zweite Ende (6b) des Federelements (6) aufsteckbar ist und in ein an dem ortfesten Bauteil (B) vorgesehenes Innengewinde greift, wobei ein Drehen der Gewindehülse in Richtung des ersten Endes (6a) des Federelements (6) die Federsteifigkeit des Federelements (6) erhöht und in Richtung des zweiten Endes (6b) des Federelements (6) die Federsteifigkeit des Federelements (6) reduziert.

13. Messvorrichtung nach einem der vorhergehenden Ansprüche, wobei das Federelement (6) eine Blattfeder ist.

## Claims

1. A measuring device (1) for measuring a path and / or a speed of an object (O) moving relative to the measuring device (1), having a measuring wheel (2) which is fixed to a shaft (W) of a rotary encoder (3) and is placed on the object (O) with a running surface (2a), and having a holding unit (4) for fastening the measuring device (1) to a stationary component (B) which is connected on a first side (4a) in a rotationally fixed manner to the measuring device (1), and on the second side opposite the first side (4a) (4b) is rotatably connected to the component (B) by means of a rotary bearing (5) such that the holding unit (4) presses the measuring wheel (2) against the object (O) by means of a spring element (6), wherein the first end of the spring element is connected to the holding unit (4) on the first side (4a) and the second end of the spring element is mounted on the second side (4b) in the rotary bearing (5) is fixed in such a way that a fixing section (FA) of the spring element (6) can be displaced along a longitudinal axis (LA) of the spring element (6) opposite the second end (6b) of the spring element (6).

2. The measuring device according to claim 1, wherein the rotary bearing (5) has a first through-bore (5a) into which the second end (6b) of the spring element (6) can be inserted.

3. The measuring device according to claim 1, wherein the spring element (6) has a holder (7), which is displaceable on the spring element (6) at the second end and which is arranged in the rotary bearing (5).

4. The measuring device as claimed in claim 3, wherein the displaceable holder (7) has a plurality of notches (K1, K2), wherein a locking means (8) can be inserted into the notch (K1, K2) so that the second end (6b) of the spring element (6) is fixed in the rotary bearing (5) by the holder (7).

5. The measuring device according to claim 4, wherein the locking means (8) is a screw or a pin which engages in the notch (K1, K2).

6. The measuring device as claimed in claim 1, wherein a spring stiffness of the spring element (6) is adjustable by displacing the fixing portion (FA) of the spring element (6) against the second end (6b) of the spring element (6).

7. The measuring device as claimed in claim 6, wherein a displacement of the fixing section (FA) towards the second end (6b) of the spring element (6) reduces the spring stiffness of the spring element (6).

8. The measuring device according to claim 6, wherein a displacement of the fixing section (FA) in the opposite direction to the second end (6b) of the spring element (6) increases the spring stiffness of the spring element (6).

9. The measuring device as claimed in claim 4, wherein each notch (K1, K2) of the holder (7) of the spring element (6) represents a predefined spring stiffness or a predefined pressing force of the spring element (6).

10. The measuring device as claimed in claim 1, wherein the rotary bearing (5) has a second through-bore (5B) which is arranged perpendicular to the first through-hole (5A) and via which the locking means (8) is insertable into the notch (K1, K2).

11. The measuring device according to claim 3, wherein the displaceable holder arranged in the rotary position (5) comprises a threaded sleeve.

12. The measuring device according to claim 11, wherein the threaded sleeve is attachable to the second end (6b) of the spring element (6) and engages in an internal thread provided on the fixed component (B), wherein rotation of the threaded sleeve in the direction of the first end (6a) of the spring element (6) increases the spring rigidity of the spring element (6) and reduces the spring stiffness of the spring element (6) in the direction of the second end (6b) of the spring element (6).

13. Measuring device according to one of the preceding claims, wherein the spring element (6) is a flat spring.

## Revendications

1. Un dispositif de mesure (1) pour mesurer un trajet et/ou une vitesse d'un objet (O) se déplaçant par rapport au dispositif de mesure (1), comportant une roue de mesure (2) qui est fixée à un arbre (W) d'un codeur rotatif (3) et est placée sur l'objet (O) avec une surface de roulement (2a) et comportant une unité de maintien (4) pour fixer le dispositif de mesure (1) à un composant stationnaire (B) qui est connecté à un premier côté (4a) de manière fixe en rotation au dispositif de mesure (1), et qui est relié sur le second côté (4b) opposé au premier côté (4a) de manière rotative au composant (B) au moyen d'un palier rotatif (5) de telle sorte que l'unité de maintien (4) appuie sur la roue de mesure (2) contre l'objet (O) au moyen d'un élément à ressort (6), dans lequel la première extrémité de l'élément à ressort est reliée à l'unité de maintien (4) sur le premier côté (4a) et la deuxième extrémité de l'élément à ressort est montée sur le second côté (4b) dans le palier rotatif (5) de telle sorte qu'une section de fixation (FA) de l'élément élastique (6) peut être déplacé le long d'un axe longitudinal (LA) de l'élément à ressort (6) opposé à la seconde extrémité (6b) de l'élément élastique (6).

2. Dispositif de mesure selon la revendication 1, dans lequel le palier rotatif (5) présente un premier trou traversant (5a) dans lequel la seconde extrémité (6b) de l'élément à ressort (6) peut être insérée.

3. Dispositif de mesure selon la revendication 1 ou 2, dans lequel l'élément à ressort (6) comporte un support (7) déplaçable sur l'élément élastique (6) à la seconde extrémité et qui est disposé dans le palier rotatif (5).

4. Dispositif de mesure selon la revendication 3, dans lequel le support déplaçable (7) présente une pluralité d'encoches (K1, K2), dans lequel un moyen de verrouillage (8) peut être inséré dans l'encoche (K1, K2) de sorte que le la seconde extrémité (6b) de l'élément à ressort (6) est fixée dans le palier rotatif (5) par le support (7).

5. Dispositif de mesure selon la revendication 4, dans lequel le moyen de verrouillage (8) est une vis ou une broche qui s'engage dans l'encoche (K1, K2).

6. Dispositif de mesure selon l'une des revendications précédentes, dans lequel une raideur de ressort de l'élément à ressort (6) est réglable en déplaçant la partie de fixation (FA) de l'élément à ressort (6) contre la seconde extrémité (6b) de l'élément à ressort (6).

7. Dispositif de mesure selon la revendication 6, dans lequel un déplacement de la section de fixation (FA) vers la seconde extrémité (6b) de l'élément élastique (6) réduit la rigidité du ressort de l'élément élastique (6).

8. Dispositif de mesure selon la revendication 6 ou 7, dans lequel un déplacement de la section de fixation (FA) dans la direction opposée à la seconde extrémité (6b) de l'élément à ressort (6) augmente la rigidité du ressort de l'élément élastique (6).

9. Dispositif de mesure selon la revendication 4 à 8, dans lequel chaque encoche (K1, K2) du support (7) de l'élément à ressort (6) représente une rigidité de ressort prédéfinie ou une force de pression prédéfinie de l'élément à ressort (6).

10. Dispositif de mesure selon l'une des revendications précédentes, dans lequel le palier rotatif (5) comporte un second alésage traversant (5B) qui est disposé perpendiculairement au premier trou traversant (5A) et par lequel le moyen de verrouillage (8) est insérable dans l'encoche (K1, K2).

11. Dispositif de mesure selon la revendication 3, dans lequel le support déplaçable disposé dans la position de rotation (5) comprend un manchon fileté.

12. Dispositif de mesure selon la revendication 11, dans lequel le manchon fileté peut être fixé à la seconde extrémité (6b) de l'élément à ressort (6) et s'engage dans un filetage intérieur prévu sur le composant fixe (B), dans lequel la rotation du manchon fileté dans la direction de la première extrémité (6a) de l'élément à ressort (6) augmente la rigidité du ressort de l'élément à ressort (6) et réduit la rigidité du ressort de l'élément à ressort (6) dans la direction de la seconde extrémité (6b ) de l'élément de ressort (6).

13. Dispositif de mesure selon l'une des revendications précédentes, dans lequel l'élément à ressort (6) est un ressort plat.
